# EUROPEAN PATENT APPLICATION

(11) **EP 4 704 430 A1**
(43) Date of publication of application: **04.03.2026**
(21) Application number: 24795845.7
(22) Date of filing: 11.04.2024
(51) Int. Cl.: H04N 21/431

(54) **LIVE STREAMING INTERFACE PROCESSING METHOD AND APPARATUS, DEVICE AND STORAGE MEDIUM**

(30) Priority: 28.04.2023 CN 202310485627
(71) Applicant: Beijing Zitiao Network Technology Co., Ltd., Beijing 100190 (CN)
(72) Inventor: YE, Zhichao, Beijing 100028 (CN)
(74) Representative: Marks & Clerk LLP
(86) International application number: PCT/CN2024/087139
(87) International publication number: WO 2024/222464

(57) **Abstract**

Embodiments of the present disclosure provide a method and apparatus for processing a live streaming interface, a device, and a storage medium. The method includes: acquiring layout information of the live streaming interface, where the layout information includes position information of at least one microphone slot area; and processing, according to the layout information, an area in a theme layer view corresponding to the microphone slot area, to display content in an area in a stream pulling player layer view corresponding to the microphone slot area, where the theme layer view is located above the stream pulling player layer view. According to the method for processing a live streaming interface according to this embodiment of the present disclosure, the area in the theme layer view corresponding to the microphone slot area is directly processed according to the layout information of the live streaming interface to display process the content in the area in the stream pulling player layer view corresponding to the microphone slot area, thereby improving the efficiency of processing the live streaming interface.

## Description

### CROSS-REFERENCE TO RELATED APPLICATION(S)

This application claims priority to Chinese Inventive Patent Application No. 202310485627.X, entitled "LIVE STREAMING INTERFACE PROCESSING METHOD AND APPARATUS, DEVICE, AND STORAGE MEDIUM", and filed on April 28, 2023, which is incorporated in its entirety herein by reference.

### FIELD

Embodiments of the present disclosure relate to the technical field of interface processing, and in particular, to a method and apparatus for processing a live streaming interface, a device, and a storage medium.

### BACKGROUND

In recent years, live video streaming has brought people a more real-time experience. The live video streaming further includes a representation form of microphone connected live streaming. In the microphone connected live streaming, a plurality of layers of views are displayed on a live streaming interface, such as a theme layer view and a stream pulling player layer view. For the theme layer view, due to its higher layer compared to the stream pulling player layer view, setting a unified background view will obscure the content in the stream pulling player layer view. In the prior art, it is necessary to split the background view into a plurality of sub-images and then place the split sub-images in corresponding positions, resulting in a complex and inefficient processing solution for the live streaming interface.

### SUMMARY

Embodiments of the present disclosure provide a method and apparatus for processing a live streaming interface, a device, and a storage medium, which process a theme layer view according to layout information and can improve efficiency of processing the live streaming interface.

In a first aspect, an embodiment of the present disclosure provides a method of processing a live streaming interface. The method includes:
acquiring layout information of the live streaming interface, where the layout information includes position information of at least one microphone slot area; and
processing, according to the layout information, an area in a theme layer view corresponding to the microphone slot area, to display content in an area in a stream pulling player layer view corresponding to the microphone slot area, where the theme layer view is located above the stream pulling player layer view.

In a second aspect, an embodiment of the present disclosure further provides an apparatus for processing a live streaming interface. The apparatus includes:
a layout information acquiring module, configured to acquire layout information of the live streaming interface, where the layout information includes position information of at least one microphone slot area; and
a view processing module, configured to process, according to the layout information, an area in a theme layer view corresponding to the microphone slot area, to display content in an area in a stream pulling player layer view corresponding to the microphone slot area, where the theme layer view is located above the stream pulling player layer view.

In a third aspect, an embodiment of the present disclosure further provides an electronic device. The electronic device includes:
one or more processors; and
a storage apparatus, configured to store one or more programs, where
the one or more programs, when executed by the one or more processors, cause the one or more processors to implement the method of processing a live streaming interface according to the embodiments of the present disclosure.

In a fourth aspect, an embodiment of the present disclosure further provides a storage medium including computer-executable instructions. The computer-executable instructions, when executed by a computer processor, are used to perform the method of processing a live streaming interface according to the embodiments of the present disclosure.

The embodiments of the present disclosure disclose the method and apparatus for processing a live streaming interface, the device, and the storage medium. The method includes: acquiring the layout information of the live streaming interface, where the layout information includes the position information of the at least one microphone slot area; and processing, according to the layout information, the area in the theme layer view corresponding to the microphone slot area, to display the content in the area in the stream pulling player layer view corresponding to the microphone slot area, where the theme layer view is located above the stream pulling player layer view. According to the method of processing a live streaming interface according to the embodiment of the present disclosure, the area in the theme layer view corresponding to the microphone slot area is directly processed according to the layout information of the live streaming interface, so as to display the content in the area in the stream pulling player layer view corresponding to the microphone slot area, thereby improving the efficiency of processing the live streaming interface.

### BRIEF DESCRIPTION OF THE DRAWINGS

The above and other features, advantages, and aspects of various embodiments of the present disclosure will become more apparent with reference to the accompanying drawings and the following specific implementations. Throughout the accompanying drawings, the same or similar reference numerals denote the same or similar elements. It should be understood that the accompanying drawings are illustrative, and components and elements may not necessarily be drawn to scale.
FIG. 1 is a schematic flowchart of a method of processing a live streaming interface according to an embodiment of the present disclosure;
FIG. 2a is an example diagram of processing a live streaming interface according to an embodiment of the present disclosure;
FIG. 2b is an example diagram of processing a live streaming interface according to an embodiment of the present disclosure;
FIG. 2c is an example diagram of processing a live streaming interface according to an embodiment of the present disclosure;
FIG. 3 is a schematic diagram of a structure of an apparatus for processing a live streaming interface according to an embodiment of the present disclosure; and
FIG. 4 is a schematic diagram of a structure of an electronic device according to an embodiment of the present disclosure.

### DETAILED DESCRIPTION OF EMBODIMENTS

The embodiments of the present disclosure will be described in more detail below with reference to the accompanying drawings. Although the accompanying drawings show some embodiments of the present disclosure, it should be understood that the present disclosure may be implemented in various forms, and should not be construed as being limited to the embodiments stated herein. On the contrary, these embodiments are provided for a more thorough and complete understanding of the present disclosure. It should be understood that the accompanying drawings and the embodiments of the present disclosure are for exemplary purposes only, and are not intended to limit the scope of protection of the present disclosure.

It should be understood that the steps recorded in the method implementations of the present disclosure may be performed in different orders and/or in parallel. In addition, additional steps may be included and/or the execution of the illustrated steps may be omitted in the method implementations. The scope of the present disclosure is not limited in this aspect.

The term "including" used herein and variations thereof are open-ended inclusions, namely "including but not limited to". The term "based on" is interpreted as "at least partially based on". The term "an embodiment" means "at least one embodiment"; the term "another embodiment" means "at least one additional embodiment"; and the term "some embodiments" means "at least some embodiments". Related definitions of other terms will be given in the description below.

It should be noted that concepts such as "first" and "second" mentioned in the present disclosure are only used to distinguish different apparatuses, modules, or units, and are not used to limit the order or relation of interdependence of functions performed by these apparatuses, modules, or units.

It should be noted that the modifiers "one" and "a plurality of" mentioned in the present disclosure are illustrative and not limiting, and those skilled in the art should understand that unless otherwise explicitly specified in the context, the modifiers should be understood as "one or more".

The names of messages or information exchanged between a plurality of apparatuses in the implementations of the present disclosure are used for illustrative purposes only, and are not used to limit the scope of these messages or information.

It should be understood that before the use of the technical solutions disclosed in the embodiments of the present disclosure, a user shall be informed of the type, range of use, use scenarios, etc., of personal information involved in the present disclosure in an appropriate manner in accordance with relevant laws and regulations, and the authorization of the user shall be obtained.

For example, in response to reception of an active request from the user, a prompt message is sent to the user to clearly inform the user that a requested operation will require access to and use of the personal information of the user. As such, the user can independently choose, according to the prompt message, whether to provide the personal information to software or hardware, such as an electronic device, an application, a server, or a storage medium, that performs the operations of the technical solutions of the present disclosure.

As an optional but non-limiting implementation, in response to the reception of the active request from the user, the method of sending the prompt message to the user may be, for example, a pop-up window, in which the prompt message may be presented in text. In addition, the pop-up window may also carry a selection control for the user to choose whether to "agree" or "disagree" to provide the personal information to the electronic device.

It should be understood that the above notification and user authorization obtaining process is only illustrative, which does not limit the implementations of the present disclosure, and other methods that comply with the relevant laws and regulations may also be applied to the implementations of the present disclosure.

It should be understood that data (including but not limited to the data itself, and data acquisition, or usage) involved in the technical solutions should comply with the requirements of the corresponding laws and regulations, and relevant stipulations.

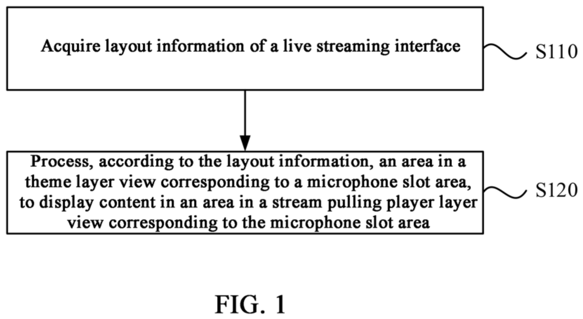

FIG. 1 is a schematic flowchart of a method of processing a live streaming interface according to an embodiment of the present disclosure. This embodiment of the present disclosure is applicable to a case of processing the live streaming interface. The method may be performed by an apparatus for processing a live streaming interface. The apparatus may be implemented in the form of software and/or hardware, and is optionally implemented through an electronic device. The electronic device may be a mobile terminal, a personal computer (PC) terminal, a server, or the like.

As shown in FIG. 1, the method includes:
S110: layout information of the live streaming interface is acquired.

The live streaming interface includes at least one microphone slot area. The live streaming interface includes a theme layer view and a stream pulling player layer view, and both the theme layer view and the stream pulling player layer view include areas corresponding to the microphone slot area. The layout information includes position information of the at least one microphone slot area. Namely, the layout information includes the number of microphone slots included in the interface and a position of each microphone slot area. The position information of the microphone slot area includes vertex coordinates and/or a border length of the microphone slot area. Exemplarily, assuming that the microphone slot area is rectangular, the position information of the microphone slot area may be represented by coordinates of four vertices, or by coordinates of one vertex, a height, and a width, or by coordinates of two vertices on a diagonal line. If the microphone slot area is polygonal, the position information of the microphone slot area may be represented by coordinates of a plurality of vertices constituting the polygon. If the microphone slot area is circular, the microphone slot area may be represented by coordinates of a circle center and a radius. The layout information may be preconfigured, which may be selected by a live streaming user according to needs, such as a 1v6 layout (one streamer microphone slot and six guest microphone slots), and a nine-grid layout (the interface includes nine microphone slot areas).

In this application scenario, the live streaming interface may be an interface used for a live streaming live connection. For example, in the live streaming process, a streamer may interact with a viewer in a live streaming room through a live connection, and a viewer who join the live connection may be referred to as a "guest"; alternatively, a plurality of streamers may be in live connection. In the live streaming interface with the live connection, content of live connected objects within the microphone slot area in the stream pulling player layer view needs to be displayed, which requires to process the theme layer view on the stream pulling player layer view.

S120: Process, according to the layout information, an area in the theme layer view corresponding to the microphone slot area is processed according to the layout information, to display content in an area in the stream pulling player layer view corresponding to the microphone slot area.

The theme layer view is located above the stream pulling player layer view, and the theme layer view may obscure the content played in the area in the stream pulling player layer view corresponding to the microphone slot area, which requires to process the theme layer view.

The area in the theme layer view corresponding to the microphone slot area may be understood as an area at the same position as the microphone slot area in the theme layer view. In this embodiment, to display the content in the area in the stream pulling player layer view corresponding to the microphone slot area, transparency of the area in the theme layer view corresponding to the microphone slot area needs to be adjusted, or the area in the theme layer view corresponding to the microphone slot area needs to be cut out.

Optionally, the process of processing, according to the layout information, an area in the theme layer view corresponding to the microphone slot area, to display content in an area in the stream pulling player layer view corresponding to the microphone slot area may include: acquiring a canvas and a theme image corresponding to the theme layer view; and processing an area in the canvas corresponding to the microphone slot area according to the layout information, and/or processing an area in the theme image corresponding to the microphone slot area according to the layout information, to display the content in the area in the stream pulling player layer view corresponding to the microphone slot area.

The canvas corresponding to the theme layer view may be understood as a canvas requested from a display system when the theme layer view is drawn. The theme image is drawn on the canvas to obtain the theme layer view. The theme image may be an image selected by the user as a theme, which may be an image stored locally by the user, downloaded from a server side, or preconfigured by an application. This embodiment does not limit a method of acquiring the theme image or the content of the theme image.

In this embodiment, methods for processing an area in the canvas corresponding to the microphone slot area according to the layout information, and/or processing an area in the theme image corresponding to the microphone slot area according to the layout information include: one is to process the area in the canvas corresponding to the microphone slot area according to the layout information; and the other is to process the area in the canvas corresponding to the microphone slot area according to the layout information and process the area in the theme image corresponding to the microphone slot area according to the layout information.

Optionally, a method of processing an area in the canvas corresponding to the microphone slot area according to the layout information may include: adjusting transparency of the area in the canvas corresponding to the microphone slot area according to the layout information; or cutting out the area in the canvas corresponding to the microphone slot area according to the layout information.

The transparency is a value between 0 and 1, where "0" represents completely transparent, and " 1 " represents completely opaque. In this embodiment, to display the content in the area in the stream pulling player layer view corresponding to the microphone slot area, one method is to adjust the area in the theme layer view corresponding to the microphone slot area from completely opaque to partially transparent or completely transparent. Namely, the transparency value needs to be adjusted from 1 to a value less than 1 (e.g., 0.3). In this embodiment, to improve a display effect, the transparency may be directly adjusted from 1 to 0, namely, adjusting from completely opaque to completely transparent. Specifically, the process of adjusting transparency of the area in the canvas corresponding to the microphone slot area according to the layout information may include: first acquiring pixel points contained in the area in the canvas corresponding to the microphone slot area, and then adjusting transparency values of these pixel points to values less than 1.

In this embodiment, to display the content in the area in the stream pulling player layer view corresponding to the microphone slot area, the other method is to cut out the area in the theme layer view corresponding to the microphone slot area. The process of cutting out the area in the canvas corresponding to the microphone slot area according to the layout information may include: first determining a position of the area in the canvas corresponding to the microphone slot area according to the layout information, and then cutting out the area from the canvas.

In this embodiment, if the transparency of the area in the canvas corresponding to the microphone slot area is adjusted, the transparency of the theme image rendered on the canvas in the area corresponding to the microphone slot area is also an adjusted value, namely, the content in the area is partially transparent or completely transparent, thereby displaying the content in the area in the stream pulling player layer view corresponding to the microphone slot area. If the area in the canvas corresponding to the microphone slot area is cut out, the theme image can only be rendered on an uncropped part of the canvas, namely, a cropped part is embodied in a "hollow" form, thereby displaying the content in the area in the underlying stream pulling player layer view corresponding to the microphone slot area.

Optionally, a method of processing an area in the theme image corresponding to the microphone slot area according to the layout information may include: adjusting transparency of the area in the theme image corresponding to the microphone slot area according to the layout information; or cutting out the area in the theme image corresponding to the microphone slot area according to the layout information.

In this embodiment, to improve the display effect, the transparency corresponding to the theme image in the microphone slot area may be adjusted directly from 1 to 0, namely, adjusting from completely opaque to completely transparent. Specifically, the process of adjusting transparency of the area in the theme image corresponding to the microphone slot area according to the layout information may include: first acquiring pixel points contained in the area in the theme image corresponding to the microphone slot area, and then adjusting transparency values of these pixel points to values less than 1.

Specifically, the process of cutting out the area in the theme image corresponding to the microphone slot area according to the layout information may include: first determining a position of the area in the theme image corresponding to the microphone slot area according to the layout information, and then cutting out the area from the canvas.

Optionally, the process of processing an area in the canvas corresponding to the microphone slot area according to the layout information, and/or processing an area in the theme image corresponding to the microphone slot area according to the layout information, to display the content in the area in the stream pulling player layer view corresponding to the microphone slot area may include: acquiring a processed theme layer view according to a processed canvas and/or a processed theme image; and overlaying the processed theme layer view with the stream pulling player layer view to display the content in the area in the stream pulling player layer view corresponding to the microphone slot area.

In this embodiment, if the method of processing, according to the layout information, an area in a theme layer view corresponding to the microphone slot area is to process the area in the canvas corresponding to the microphone slot area according to the layout information, a method of acquiring a processed theme layer view according to a processed canvas and/or a processed theme image may include: rendering an unprocessed theme image onto the processed canvas. Namely, in a case that the theme image is not processed, the unprocessed theme image is rendered onto the processed canvas. If the method of processing, according to the layout information, an area in the theme layer view corresponding to the microphone slot area is to process the area in the canvas corresponding to the microphone slot area according to the layout information and process the area in the theme image corresponding to the microphone slot area according to the layout information, a method of acquiring a processed theme layer view according to a processed canvas and/or a processed theme image may include: rendering the processed theme image onto the processed canvas. Namely, in a case that the theme image is processed, the processed theme image is rendered onto the processed canvas to obtain the processed theme layer view.

Specifically, if the transparency of the area in the canvas corresponding to the microphone slot area is adjusted and the theme image is not processed, the theme image is rendered onto the canvas with the adjusted transparency. If the area in the canvas corresponding to the microphone slot area is cut out and the theme image is not processed, the theme image is rendered onto the cropped canvas. If the transparencies of the areas in the canvas and the theme image corresponding to the microphone slot area are both adjusted, the theme image with the adjusted transparency is rendered onto the canvas with the adjusted transparency. If both the areas in the canvas and the theme image corresponding to the microphone slot area are cut out, the cropped theme image is rendered onto the cropped canvas. If the transparency of the area in the canvas corresponding to the microphone slot area is adjusted and the area in the theme image corresponding to the microphone slot area is cut out, the cropped theme image is rendered onto the canvas with the adjusted transparency. If the area in the canvas corresponding to the microphone slot area is cut out and the transparency of the area in the theme image corresponding to the microphone slot area is adjusted, the theme image with the adjusted transparency is rendered onto the cropped canvas.

Optionally, the process of overlaying the processed theme layer view with the stream pulling player layer view to display the content in the area in the stream pulling player layer view corresponding to the microphone slot area may include: overlaying the processed theme layer view onto the stream pulling player layer view to display the content in the area in the stream pulling player layer view corresponding to the microphone slot area.

In this embodiment, overlaying the processed theme layer view onto the stream pulling player layer view may prevent the content in the area in the stream pulling player layer view corresponding to the microphone slot area from being obscured, thereby displaying the content in the area in the stream pulling player layer view corresponding to the microphone slot area.

Optionally, the process of processing an area in the canvas corresponding to the microphone slot area according to the layout information, and/or processing an area in the theme image corresponding to the microphone slot area according to the layout information, to display the content in the area in the stream pulling player layer view corresponding to the microphone slot area may also include: first overlaying the processed canvas with the stream pulling player layer view, then rendering the processed theme image onto the canvas overlaid onto the stream pulling player layer view, and acquiring the processed theme layer view overlaid onto the stream pulling player layer view, to display the content in the area in the stream pulling player layer view corresponding to the microphone slot area. In this embodiment, the canvas and the stream pulling player layer view are first overlaid, thereby improving the efficiency of processing the theme layer view.

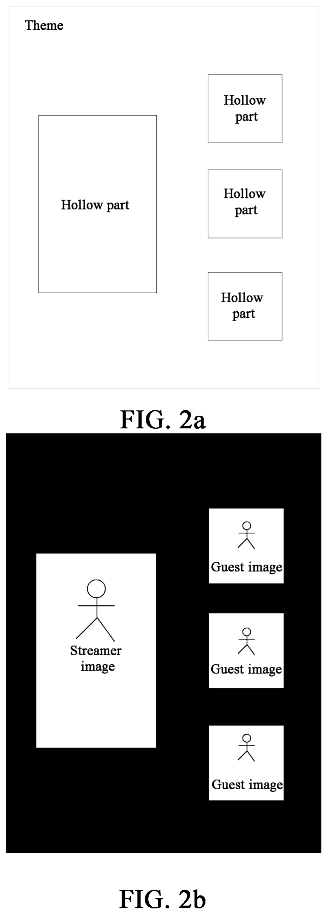

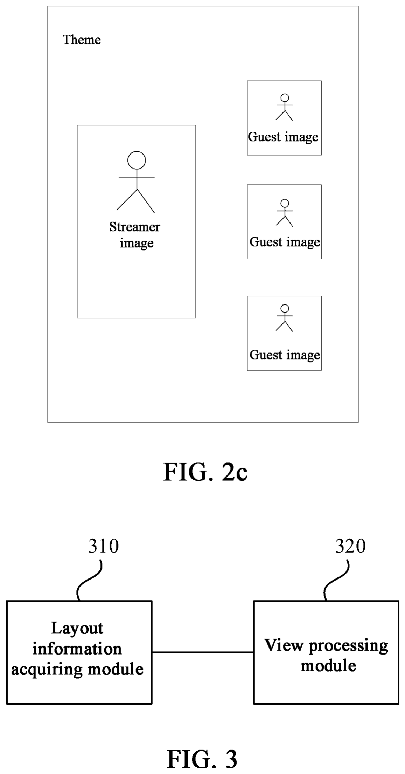

Exemplarily, FIG. 2a to FIG. 2c are example diagrams of processing a live streaming interface according to this embodiment. FIG. 2a shows the processed theme layer view. It can be seen from FIG. 2a that the area in the theme layer view corresponding to the microphone slot area is "hollowed". FIG. 2b shows the stream pulling player layer view. It can be seen from FIG. 2b that an image of each microphone connected user is displayed in a corresponding microphone slot area. FIG. 2c shows an image that the theme layer view and the stream pulling player layer view are overlaid. It can be seen from FIG. 2c that the microphone slot area displays images of the microphone connected users, and other areas display the content of the theme image.

According to the technical solutions of the embodiments of the present disclosure, the layout information of the live streaming interface is acquired, where the layout information includes the position information of the at least one microphone slot area; and according to the layout information, the area in the theme layer view corresponding to the microphone slot area is processed to display the content in the area in the stream pulling player layer view corresponding to the microphone slot area, where the theme layer view is located above the stream pulling player layer view. According to the method of processing a live streaming interface according to this embodiment of the present disclosure, the area in the theme layer view corresponding to the microphone slot area is directly processed according to the layout information of the live streaming interface to display the content in the area in the stream pulling player layer view corresponding to the microphone slot area, thereby improving the efficiency of processing the live streaming interface.

FIG. 3 is a schematic diagram of a structure of an apparatus for processing a live streaming interface according to an embodiment of the present disclosure. At least one microphone slot area is contained in the live streaming interface. The live streaming interface includes a theme layer view and a stream pulling player layer view. As shown in FIG. 3, the apparatus includes:
a layout information acquiring module 310, configured to acquire layout information of the live streaming interface, where the layout information includes position information of at least one microphone slot area; and
a view processing module 320, configured to process, according to the layout information, an area in the theme layer view corresponding to the microphone slot area, to display content in an area in the stream pulling player layer view corresponding to the microphone slot area, where the theme layer view is located above the stream pulling player layer view.

Optionally, the view processing module 320 is further configured to:
acquire a canvas and a theme image corresponding to the theme layer view; and
process an area in the canvas corresponding to the microphone slot area according to the layout information, and/or process an area in the theme image corresponding to the microphone slot area according to the layout information, to display the content in the area in the stream pulling player layer view corresponding to the microphone slot area.

Optionally, the view processing module 320 is further configured to:
adjust transparency of the area in the canvas corresponding to the microphone slot area according to the layout information; or cut out the area in the canvas corresponding to the microphone slot area according to the layout information.

Optionally, the view processing module 320 is further configured to:
adjust transparency of the area in the theme image corresponding to the microphone slot area according to the layout information; or, cut out the area in the theme image corresponding to the microphone slot area according to the layout information.

Optionally, the view processing module 320 is further configured to:
acquire a processed theme layer view according to the processed canvas and/or the processed theme image; and
overlay the processed theme layer view with the stream pulling player layer view to display the content in the area in the stream pulling player layer view corresponding to the microphone slot area.

Optionally, the view processing module 320 is further configured to:
render an unprocessed theme image onto the processed canvas in a case that the theme image is not processed; or render the processed theme image onto the processed canvas in a case that the theme image is processed, to obtain the processed theme layer view.

Optionally, the view processing module 320 is further configured to:
overlay the processed theme layer view on a top of the stream pulling player layer view to display the content in the area in the stream pulling player layer view corresponding to the microphone slot area.

Optionally, the position information of the microphone slot area includes vertex coordinates and/or a border length of the microphone slot area.

The apparatus for processing a live streaming interface according to this embodiment of the present disclosure may perform the method of processing a live streaming interface according to any embodiment of the present disclosure, and has the corresponding functional modules and beneficial effects for performing the method.

It should be noted that the various units and modules included in the above apparatus are only divided according to functional logics, but are not limited to the above division, as long as the corresponding functions can be achieved; and in addition, the specific names of the functional units are only for the convenience of distinguishing each other, and are not used to limit the scope of protection of the embodiments of the present disclosure.

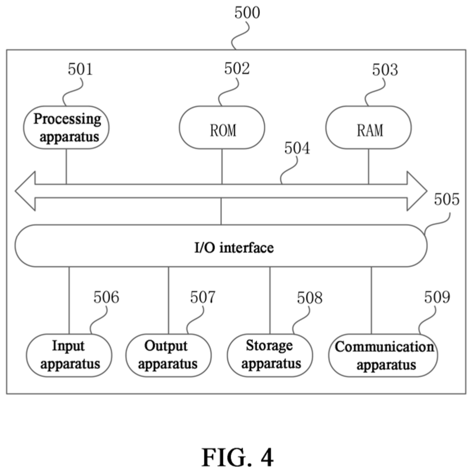

FIG. 4 is a schematic diagram of a structure of an electronic device according to an embodiment of the present disclosure. Referring to FIG. 4 as below, FIG. 4 illustrates a schematic diagram of a structure of an electronic device (e.g., a terminal device or a server in FIG. 4) 500 suitable for implementing an embodiment of the present disclosure. The terminal device in this embodiment of the present disclosure may include, but is not limited to, mobile terminals such as a mobile phone, a notebook computer, a digital broadcast receiver, a personal digital assistant (PDA), a portable Android device (PAD), a portable media player (PMP), and a vehicle terminal (e.g., a vehicle navigation terminal), and fixed terminals such as a digital TV and a desktop computer. The electronic device shown in FIG. 4 is merely an example, which should not impose any limitations on functions and application ranges of this embodiment of the present disclosure.

As shown in FIG. 4, the electronic device 500 may include a processing apparatus (e.g., a central processing unit and a graphics processing unit) 501, which may perform various appropriate actions and processing according to a program stored on a read-only memory (ROM) 502 or a program loaded from a storage apparatus 508 into a random access memory (RAM) 503.The RAM 503 further stores various programs and data required for the operation of the electronic device 500.The processing apparatus 501, the ROM 502, and the RAM 503 are connected to one another through a bus 504.An edit/output (I/O) interface 505 is also connected to the bus 504.

Typically, the following apparatuses may be connected to the I/O interface 505: an input apparatus 506 including, for example, a touchscreen, a touchpad, a keyboard, a mouse, a camera, a microphone, an accelerometer, and a gyroscope; an output apparatus 507 including, for example, a liquid crystal display (LCD), a speaker, and a vibrator; the storage apparatus 508 including, for example, a magnetic tape and a hard drive; and a communication apparatus 509.The communication apparatus 509 may allow the electronic device 500 to be in wireless or wired communication with other devices for data exchange. Although FIG. 4 shows the electronic device 500 having various apparatuses, it should be understood that it is not required to implement or have all of the shown apparatuses. It may be an alternative to implement or have more or fewer apparatuses.

In particular, the above process described with reference to the flowcharts according to the embodiments of the present disclosure may be implemented as a computer software program. For example, an embodiment of the present disclosure includes a computer program product, which includes a computer program carried on a non-transitory computer-readable medium, where the computer program includes program code for performing the method shown in the flowchart. In this embodiment, the computer program may be downloaded and installed from the network by the communication apparatus 509, or installed from the storage apparatus 508, or installed from the ROM 502.The computer program, when executed by the processing apparatus 501, performs the above functions limited in the method in this embodiment of the present disclosure.

The names of messages or information exchanged between a plurality of apparatuses in the implementations of the present disclosure are used for illustrative purposes only, and are not used to limit the scope of these messages or information.

The electronic device according to this embodiment of the present disclosure and the method of processing a live streaming interface according to the above embodiments belong to the same inventive concept. For the technical details not exhaustively described in this embodiment, reference may be made to the above embodiments, and this embodiment and the above embodiments have the same beneficial effects.

An embodiment of the present disclosure provides a computer storage medium, having a computer program stored therein. The program, when executed by a processor, implements the method of processing a live streaming interface according to the above embodiment.

It should be noted that the above computer-readable medium in the present disclosure may be either a computer-readable signal medium or a computer-readable storage medium, or any combination of the two. The computer-readable storage medium may be, for example, but is not limited to, electric, magnetic, optical, electromagnetic, infrared, or semiconductor systems, apparatuses, or devices, or any combination of the above. More specific examples of the computer-readable storage medium may include, but are not limited to: an electrical connection with one or more wires, a portable computer disk, a hard drive, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above. In the present disclosure, the computer-readable storage medium may be any tangible medium including or storing a program, and the program may be for use by or for use in combination with an instruction execution system, apparatus, or device. However, in the present disclosure, the computer-readable signal medium may include a data signal propagated in a baseband or as a part of a carrier, where the data signal carries computer-readable program code. The propagated data signal may take various forms, including but not limited to an electromagnetic signal, an optical signal, or any suitable combination of the above. The computer-readable signal medium may further be any computer-readable medium other than the computer-readable storage medium. The computer-readable signal medium may send, propagate, or transmit a program for use by or for use in combination with the instruction execution system, apparatus, or device. The program code included in the computer-readable medium may be transmitted by any suitable medium, including but not limited to a wire, an optical cable, radio frequency (RF), etc., or any suitable combination of the above.

In some implementations, a client and a server may communicate using any currently known or future-developed network protocols such as a hypertext transfer protocol (HTTP), and may be interconnected with digital data communication in any form or medium (e.g., a communication network). Examples of the communication network include a local area network ("LAN"), a wide area network ("WAN"), an internetwork (e.g., the Internet), a peer-to-peer network (e.g., an ad hoc peer-to-peer network), and any currently known or future-developed network.

The above computer-readable medium may be included in the above electronic device; or may also separately exist without being assembled in the electronic device.

The above computer-readable medium carries one or more programs. The above one or more programs, when executed by the electronic device, cause the electronic device to:

The above computer-readable medium carries one or more programs. The above one or more programs, when executed by the electronic device, cause the electronic device to: acquire layout information of a live streaming interface, where the layout information includes position information of at least one microphone slot area; and process, according to the layout information, an area in a theme layer view corresponding to the microphone slot area, to display content in an area in a stream pulling player layer view corresponding to the microphone slot area, where the theme layer view is located above the stream pulling player layer view.

Computer program code for performing operations of the present disclosure may be written in one or more programming languages or a combination thereof, where the above programming languages include, but are not limited to, object-oriented programming languages, such as Java, Smalltalk, and C++, and further include conventional procedural programming languages, such as "C" language or similar programming languages. The program code may be executed entirely on a user computer, partly on the user computer, as a stand-alone software package, partly on the user computer and partly on a remote computer, or entirely on the remote computer or the server. In the case of the remote computer, the remote computer may be connected to the user computer through any kind of network, including a local area network (LAN) or a wide area network (WAN), or may be connected to an external computer (e.g., connected through the Internet with the aid of an Internet service provider).

The flowchart and the block diagram in the accompanying drawings illustrate the possibly implemented system architecture, functions, and operations of the system, the method, and the computer program product according to various embodiments of the present disclosure. In this regard, each block in the flowchart or the block diagram may represent a module, a program segment, or a part of code, and the module, the program segment, or the part of code contains one or more executable instructions for implementing specified logical functions. It should also be noted that, in some alternative implementations, the functions marked in the blocks may also occur in an order different from those marked in the accompanying drawings. For example, two consecutively-shown blocks may actually be executed in parallel basically, but sometimes may also be executed in a reverse order, depending on involved functions. It should also be noted that each block in the block diagrams and/or the flowcharts, and a combination of the blocks in the block diagrams and/or the flowcharts may be implemented using a dedicated hardware-based system that performs specified functions or operations, or may be implemented using a combination of dedicated hardware and computer instructions.

The involved units described in the embodiments of the present disclosure may be implemented through software or hardware. The name of the unit does not constitute a limitation on the unit itself in some cases. For example, a first acquiring unit may also be described as "a unit for acquiring at least two Internet protocol addresses".

Herein, the functions described above may be at least partially executed by one or more hardware logic components. For example, without limitation, exemplary hardware logic components that can be used include: a field-programmable gate array (FPGA), an application-specific integrated circuit (ASIC), an application-specific standard product (ASSP), a system on chip (SOC), a complex programmable logic device (CPLD), etc.

In the context of the present disclosure, a machine-readable medium may be a tangible medium that may include or store a program for use by or for use in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above content. More specific examples of the machine-readable storage medium may include an electrical connection based on one or more wires, a portable computer disk, a hard drive, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above content.

What are described above are only preferred embodiments of the present disclosure and explanations of the technical principles applied. Those skilled in the art should understand that the scope of the disclosure involved in the present disclosure is not limited to the technical solutions formed by specific combinations of the above technical features, and shall also cover other technical solutions formed by any combination of the above technical features or equivalent features thereof without departing from the above concept of disclosure, such as a technical solution formed by replacing the above features with the technical features with similar functions disclosed (but not limited to) in the present disclosure.

Further, although the operations are described in a particular order, it should not be understood as requiring these operations to be performed in the shown particular order or in a sequential order. In certain environments, multitasking and parallel processing may be advantageous. Similarly, although several specific implementation details are included in the above discussion, these specific implementation details should not be interpreted as limitations on the scope of the present disclosure. Some features that are described in the context of separate embodiments may also be implemented in combination in a single embodiment. In contrast, various features described in the context of a single embodiment may also be implemented in a plurality of embodiments individually or in any suitable sub combination.

Although the subject matter has been described in a language specific to structural features and/or logical actions of the method, it should be understood that the subject matter defined in the appended claims is not necessarily limited to the specific features or actions described above. On the contrary, the specific features and the actions described above are merely example forms for implementing the claims.

## Claims

1. A method of processing a live streaming interface, comprising:
acquiring layout information of the live streaming interface, wherein the layout information comprises position information of at least one microphone slot area; and
processing, according to the layout information, an area in a theme layer view corresponding to the microphone slot area, to display content in an area in a stream pulling player layer view corresponding to the microphone slot area, wherein the theme layer view is located above the stream pulling player layer view.

2. The method according to claim 1, wherein processing, according to the layout information, the area in the theme layer view corresponding to the microphone slot area, to display the content in the area in the stream pulling player layer view corresponding to the microphone slot area comprises:
acquiring a canvas and a theme image corresponding to the theme layer view; and
processing an area in the canvas corresponding to the microphone slot area according to the layout information, and/or processing an area in the theme image corresponding to the microphone slot area according to the layout information, to display the content in the area in the stream pulling player layer view corresponding to the microphone slot area.

3. The method according to claim 2, wherein processing the area in the canvas corresponding to the microphone slot area according to the layout information comprises:
adjusting transparency of the area in the canvas corresponding to the microphone slot area according to the layout information; or cutting out the area in the canvas corresponding to the microphone slot area according to the layout information.

4. The method according to claim 2, wherein processing the area in the theme image corresponding to the microphone slot area according to the layout information comprises:
adjusting transparency of the area in the theme image corresponding to the microphone slot area according to the layout information; or, cutting out the area in the theme image corresponding to the microphone slot area according to the layout information.

5. The method according to claim 2, wherein processing the area in the canvas corresponding to the microphone slot area according to the layout information, and/or processing the area in the theme image corresponding to the microphone slot area according to the layout information, to display the content in the area in the stream pulling player layer view corresponding to the microphone slot area comprises:
acquiring a processed theme layer view according to the processed canvas and/or the processed theme image; and
overlaying the processed theme layer view with the stream pulling player layer view to display the content in the area in the stream pulling player layer view corresponding to the microphone slot area.

6. The method according to claim 5, wherein acquiring the processed theme layer view according to the processed canvas and/or the processed theme image comprises:
rendering the unprocessed theme image onto the processed canvas in response to the theme image not being processed; or rendering the processed theme image onto the processed canvas in response to the theme image being processed, to obtain the processed theme layer view.

7. The method according to claim 5, wherein overlaying the processed theme layer view with the stream pulling player layer view to display the content in the area in the stream pulling player layer view corresponding to the microphone slot area comprises:
overlaying the processed theme layer view on a top of the stream pulling player layer view to display the content in the area in the stream pulling player layer view corresponding to the microphone slot area.

8. The method according to claim 1, wherein the position information of the microphone slot area comprises vertex coordinates and/or a border length of the microphone slot area.

9. An apparatus for processing a live streaming interface, comprising:
a layout information acquiring module, configured to acquire layout information of the live streaming interface, wherein the layout information comprises position information of at least one microphone slot area; and
a view processing module, configured to process, according to the layout information, an area in a theme layer view corresponding to the microphone slot area, to display content in an area in a stream pulling player layer view corresponding to the microphone slot area, wherein the theme layer view is located above the stream pulling player layer view.

10. An electronic device, wherein the electronic device comprises:
one or more processors; and
a storage apparatus, configured to store one or more programs, wherein
the one or more programs, when executed by the one or more processors, cause the one or more processors to implement the method of processing a live streaming interface according to any of claims 1 to 8.

11. A storage medium comprising computer-executable instructions, wherein the computer-executable instructions, when executed by a computer processor, are used to perform the method of processing a live streaming interface according to any of claims 1 to 8.
